# EUROPÄISCHE PATENTSCHRIFT

(11) **EP 3 320 206 B1**
(45) Veröffentlichungstag und Bekanntmachung des Hinweises auf die Patenterteilung: **20.03.2019**
(21) Anmeldenummer: 16728241.7
(22) Anmeldetag: 25.05.2016
(51) Int. Cl.: F03B 1/02

(54) **LAUFRAD EINER PELTON-TURBINE**
RUNNER OF A PELTON TURBINE
ROUE D'UNE TURBINE PELTON

(30) Priorität: 07.07.2015 DE 102015212624
(43) Veröffentlichungstag der Anmeldung: 16.05.2018
(73) Patentinhaber: Voith Patent GmbH, 89522 Heidenheim (DE)
(72) Erfinder: ROHRER, Martin, 3161 St. Veit/Gölsen (AT); SCHUBERT, Thomas, 3183 Lehenrotte (AT)
(86) Internationale Anmeldenummer: PCT/EP2016/061746
(87) Internationale Veröffentlichungsnummer: WO 2017/005405

(56) Entgegenhaltungen:
- EP-A1- 0 882 888
- EP-A1- 0 892 173
- DE-B- 1 063 540

## Beschreibung

Die vorliegende Erfindung betrifft ein Laufrad einer Pelton-Turbine mit einer Vielzahl von an einem scheibenförmigen Rad angeordneten Bechern.

Aufgrund der hohen Anforderungen an die Materialgüte bzgl. Festigkeit und Lebensdauer wäre es wünschenswert, Laufräder für eine Pelton-Turbine einteilig aus einer großen Schmiedescheibe durch Fräsen aus dem Vollen herzustellen. Insbesondere bei Laufrädern mit großen Durchmessern ist dieses Verfahren jedoch nicht wirtschaftlich, da die Herstellung eines geschmiedeten Rohlings in der notwendigen Größe sehr aufwendig ist.

Aus dem Stand der Technik (siehe z.B. EP 0 882 888 A1) sind Laufräder für eine Pelton-Turbine bekannt, die dieses Problem dadurch lösen, dass nur die Radnabe mit den Becherwurzeln aus einem geschmiedetem Rohling gefertigt werden, und die Becherkörper in ein (siehe EP 0 882 888 A1, Fig. 5) oder mehreren Stücken (siehe EP 0 882 888 A1, Fig. 3) mit den Becherwurzeln z.B. durch Schweißen verbunden werden. Dadurch wird die benötigte Größe des Schmiederohlings deutlich verkleinert.

Die Erfinder haben sich die Aufgabe gestellt, das aus dem Stand der Technik bekannte Laufrad weiter im Hinblick auf die Herstellungskosten zu verbessern. Sie haben erkannt, dass einerseits die Länge der benötigten Schweißnaht und andererseits die Größe der anzuschweißenden Teile Kostentreiber für die Herstellung darstellen. In der Praxis werden nämlich auch die angeschweißten Becherteile aus geschmiedetem Material hergestellt, und auch für diese ist es kostengünstiger, wenn die jeweiligen Rohlinge möglichst klein gewählt werden können.

Die erfindungsgemäße Lösung wird nachfolgend anhand von Figuren erläutert. Darin ist im Einzelnen folgendes dargestellt:

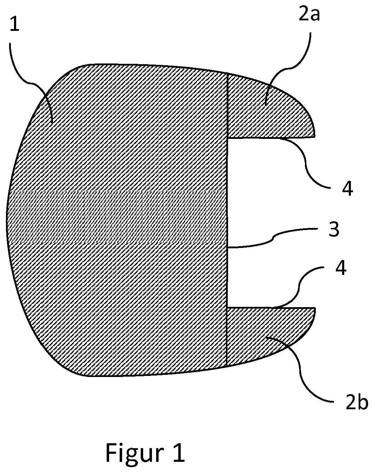

- Figur 1: erfindungsgemäße Anordnung der anzuschweißenden Becherteile

In Figur 1 sind für die erfindungsgemäße Anordnung die Becherteile dargestellt, die jeweils an eine zugehörige Becherwurzel angeschweißt werden. Dabei ist mit 1 ein Becherteil bezeichnet, der sich in radialer Richtung bezogen auf die Laufradachse an die Becherwurzel anschließt. Teil 1 ergibt sich konstruktiv durch Kante 3, die die Begrenzung der Becherwurzeln in radialer Richtung darstellt. Weiterhin sind mit 2a und 2b Becherteile bezeichnet, die sich in axialer Richtung an die Becherwurzel anschließen. Die Becherwurzel endet in axialer Richtung an den mit 4 bezeichneten Kanten. Für jeden Becher werden also 3 Becherteile an die jeweilige Becherwurzel angeschweißt. Dabei werden Schweißnahten entlang den Kanten 3 und 4 benötigt. Die Schweißnaht entlang der Kante 3 verbindet auch die Becherteile 2a und 2b mit dem Becherteil 1. Teil 1 umfasst also den gesamten Teil des Becherkörpers, der sich in radialer Richtung außerhalb der Begrenzung der Becherwurzeln erstreckt, und die Teile 2 schließen jeweils in axialer Richtung an die Becherwurzel an und umfassen den restlichen Teil des Becherkörpers.

Die Vorteile der erfindungsmäßen Anordnung lassen sich am bestem im Vergleich mit Fig. 5 aus EP 0 882 888 A1 erläutern. Aus Fig. 5 ist ersichtlich, dass der anzuschweißende Becherteil einteilig aus dem gesamten Becher ohne Becherwurzel besteht. Schweißnähte verlaufen entlang den Kanten 12 und 13. In der erfindungsgemäßen Anordnung nach Figur 1 ist die Größe der benötigen geschmiedeten Rohlinge für die anzuschweißenden Becherteile deutlich geringer, da die maximale Größe nur der Größe von Becherteil 1 entspricht. Diese Verkleinerung wird mit einer etwas längeren Schweißnaht erkauft (die Verbindung zwischen den Teilen 1 und 2 entlang der Kante 3). Diese Verlängerung fällt aber kostenmäßig viel weniger ins Gewicht, so dass die erfindungsgemäße Anordnung nach Figur 1 kostengünstiger zu fertigen ist als die Anordnung gemäß Fig.5 aus EP 0 882 888 A1.

Besonders kostengünstig lässt sich das erfindungsgemäße Laufrad mit durch Schweißen mittels Engspaltverfahren herstellen.

## Patentansprüche

1. Laufrad einer Pelton-Turbine mit einer Vielzahl von an einem scheibenförmigen Rad angeordneten Bechern, welche jeweils aus einer unmittelbar an das Rad anschließenden Becherwurzel und einem Becherkörper bestehen, wobei das scheibenförmige Rad mit den Becherwurzeln einteilig aus einem geschmiedeten Material ausgebildet ist, und wobei gesondert gefertigte Becherkörper aus drei separaten Teilen (1, 2a, 2b) pro Becher mit der jeweils zugehörigen Becherwurzel durch Schweißen verbunden sind, **dadurch gekennzeichnet, dass** ein erstes Teil (1) den gesamten Teil des Becherkörpers umfasst, welcher sich in radialer Richtung jenseits der Becherwurzel erstreckt, und zwei weitere Teile (2a, 2b), die axial an die Becherwurzel angrenzen, den restlichen Becherkörper umfassen.

2. Laufrad nach Anspruch 1, **dadurch gekennzeichnet, dass** die Teile (1, 2a, 2b) mittels Engspaltverfahren an die jeweilige Becherwurzel angeschweißt sind.

## Claims

1. Runner of a Pelton turbine with a multiplicity of buckets which are arranged on a disk-like wheel and which consist in each case of a bucket root, which directly adjoins the wheel, and a bucket body, wherein the disk-like wheel with the bucket roots is formed in one piece from a forged material, and wherein separately produced bucket bodies consisting of three separate parts (1, 2a, 2b) per bucket are connected to the respectively associated bucket root by means of welding, **characterized in that** a first part (1) comprises the entire part of the bucket body which extends in the radial direction across the bucket root, and two further parts (2a, 2b), which axially adjoin the bucket root, comprise the rest of the bucket body.

2. Runner according to Claim 1, **characterized in that** the bucket parts (1, 2a, 2b) are welded onto the respective bucket root by means of a narrow-gap method.

## Revendications

1. Roue mobile de turbine Pelton, comprenant une pluralité de godets disposés sur une roue en forme de disque, qui se composent chacun d'une emplanture de godet se raccordant directement à la roue et d'un corps de godet, la roue en forme de disque étant réalisée avec les emplantures de godets d'une seule pièce en un matériau forgé et des corps de godets fabriqués séparément, constitués de trois pièces séparées (1, 2a, 2b) par godet, étant connectés par soudage à l'emplanture de godet respectivement associée, **caractérisée en ce qu'**une première partie (1) comprend la partie complète du corps de godet qui s'étend dans la direction radiale au-delà de l'emplanture de godet et deux autres parties (2a, 2b) qui sont axialment adjacentes à l'emplanture de godet, comprennent le reste du corps de godet.

2. Roue mobile selon la revendication 1, **caractérisée en ce que** les parties (1, 2a, 2b) sont soudées à l'emplanture de godet respective au moyen d'un procédé de soudage à joint étroit.
